# EUROPEAN PATENT SPECIFICATION

(11) **EP 3 874 925 B1**
(45) Date of publication and mention of the grant of the patent: **14.06.2023**
(21) Application number: 18940775.2
(22) Date of filing: 20.11.2018
(51) Int. Cl.: H04N 5/232, H04N 5/235, A01B 69/00, A01D 34/00, G05D 1/00

(54) **AUTONOMOUS WORK MACHINE, AUTONOMOUS WORK MACHINE CONTROL METHOD, AND PROGRAM**
AUTONOME ARBEITSMASCHINE, STEUERUNGSVERFAHREN FÜR AUTONOME ARBEITSMASCHINEN UND PROGRAMM
MACHINE DE TRAVAIL AUTONOME, PROCÉDÉ DE COMMANDE DE MACHINE DE TRAVAIL AUTONOME ET PROGRAMME

(43) Date of publication of application: 08.09.2021
(73) Proprietor: HONDA MOTOR CO., LTD., Minato-ku Tokyo 107-8556 (JP)
(72) Inventor: UDAGAWA, Takamasa, Wako-shi, Saitama 351-0193 (JP); YAMAMURA, Makoto, Wako-shi, Saitama 351-0193 (JP); TAKAHASHI, Hiroto, Wako-shi, Saitama 351-0193 (JP)
(74) Representative: Beder, Jens
(86) International application number: PCT/JP2018/042852
(87) International publication number: WO 2020/105124

(56) References cited:
- EP-A1- 3 226 207
- WO-A1-2017/159176
- JP-A- H01 160 402
- JP-A- 2007 156 689
- JP-A- 2008 180 840
- JP-A- 2010 226 652
- JP-A- 2011 114 442
- JP-A- 2011 128 212
- JP-A- 2013 153 413
- JP-A- 2016 006 932
- JP-A- 2016 095 661
- JP-A- 2017 173 875
- JP-A- 2017 207 340
- JP-A- 2017 207 340
- JP-A- 2017 221 222
- JP-B2- 2 593 164
- US-A- 5 911 669

## Description

### TECHNICAL FIELD

The present invention relates to a system of autonomous work machines, a method of controlling the same, and a program.

### BACKGROUND ART

PTL 1 discloses a lane departure prevention device that recognizes the position of a lane marker by using a camera mounted on a vehicle and executes image processing to correct the position of the lane marker when the detected position of the sun is in a backlighting position with respect to the camera. PTL 2 discloses a driving plan creating apparatus for creating a driving plan of an automatic driving vehicle.

### CITATION LIST

### PATENT LITERATURE

PTL 1: Japanese Patent Laid-Open No. 2009-37541
PTL 2: Japanese Patent Laid-Open No. 2017-207340 A

### SUMMARY OF INVENTION

The invention is set out in the appended set of claims.

### TECHNICAL PROBLEM

However, in an autonomous work machine that observes the external world by using an image captured by a camera and works in a work area while autonomously traveling through various kinds of tracks, if the information of the external world is to be recognized by applying image processing in the manner of PTL 1, a more complicated image processing operation may be needed depending on various kinds of image capturing conditions. PTL 2 is incapable of recognizing a surrounding environment using the captured image by backlight from the sun.

In consideration of the above problem, the present invention provides a technique that, instead of correcting the image of the camera, controls the autonomous work machine to avoid backlighting.

### SOLUTION TO PROBLEM

A system of autonomous work machines comprising a plurality of autonomous work machines working in the same area, a network and a server, wherein an autonomous work machine according to an aspect of the present invention is an autonomous work machine that includes a camera configured to capture an image of an external world, the autonomous work machine comprising: a communication unit configured to be capable of wireless communication with the server via the network; an obtainment unit configured to obtain, based on date and time information, azimuth information of the sun, and imaging date and time information of the autonomous work machine, sun information that indicates one of a position and an azimuth of the sun in which backlighting can occur while the autonomous work machine is traveling in a work area; a generation unit configured to generate, as the sun information in a case in which a track in which backlighting will occur is present among the set while the autonomous work machine is traveling in the work area, information obtained by associating the azimuth information of the sun with the imaging date and time information and position information and direction information on the track of the autonomous work machine; and
a control unit configured to set, based on the sun information generated by the generation unit, tracks by which the autonomous work machine will avoid backlighting, characterized by the communication unit causes a database in the server to store the sun information generated by the generation unit the obtainment unit obtains the sun information stored in the database, and the sun information stored in the database is shared among the plurality of autonomous work machines that are working in the same work area.

### ADVANTAGEOUS EFFECTS OF INVENTION

According to the present invention, the autonomous work machine can be controlled to avoid backlighting.

### BRIEF DESCRIPTION OF DRAWINGS

Fig. 1A is a schematic top view of an autonomous work machine according an embodiment;
Fig. 1B is a schematic side view of the autonomous work machine according to the embodiment;
Fig. 2 is a block diagram showing the relationship of inputs/outputs of an electronic control unit (ECU) that controls the autonomous work machine according to the embodime
Fig. 3 is a schematic view showing an example of using an autonomous work machine 10;
Fig. 4 is a flowchart for explaining a processing procedure executed by the autonomous work machine;
Fig. 5 is a view for schematically explaining an on-the-spot turn mode;
Fig. 6 is a view for schematically explaining a turn mode in which the autonomous work machine advances while turning;
Fig. 7 is a view for explaining a transition to the on-the-spot turn mode or the advancing-while-turning mode;
Fig. 8 is a view for schematically explaining control for correcting a track by backlight avoidance control after a turn has been performed under normal control;
Fig. 9 is a flowchart for explaining a processing procedure executed by an autonomous work machine;
Fig. 10 is a view for schematically explaining a case in which backlighting occurs when the autonomous work machine is traveling in a work area; and
Fig. 11 is a view for schematically explaining the setting of a track that avoids backlighting.

### DESCRIPTION OF EMBODIMENTS

### <First Embodiment>

Embodiments of the present invention will be described hereinafter with reference to the accompanying drawings. Components described in the embodiments are merely exemplary and are not limited by the following embodiments.

### (Outline of Autonomous Work Machine)

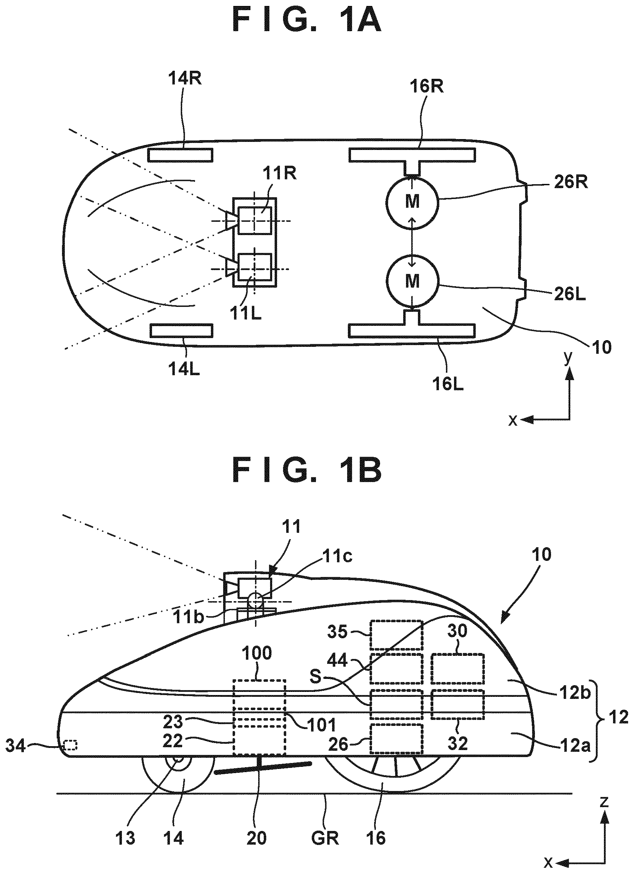

Fig. 1A is a schematic top view of an autonomous work machine according to the first embodiment, and Fig. 1B is a schematic side view of the autonomous work machine according to the first embodiment. In the following description, the direction of travel (vehicle longitudinal direction: x direction) of the autonomous work machine in a side view, a lateral direction (vehicle width direction: y direction) orthogonal to the direction of travel, and a perpendicular direction (z direction) orthogonal to the direction of travel and the lateral direction are defined as a front-and-rear direction, a left-and-right direction (horizontal direction), and a vertical direction, respectively, and the arrangement of each component will be explained in accordance with these directions.

In Figs. 1A and 1B, reference numeral 10 denotes an autonomous work machine that works in a work area while autonomously traveling in the work area. The autonomous work machine 10 can function as, for example, a lawn mower, a weeder, snow removal equipment, a golf ball collector, a tiller, or the like that can work in a work area while autonomously traveling in the work area. However, the example of the autonomous work machine is merely an example, and the present invention is applicable to other kinds of work machines. In the following description, the arrangement of a lawn mower whose work area is a plot of lawn will be exemplified to describe the embodiments of the present invention.

As shown in Figs. 1A and 1B, the autonomous work machine 10 includes cameras 11, a vehicle body 12, a stay 13, front wheels 14, rear wheels 16, a blade 20, a work motor 22, a motor holding member 23, a blade height adjustment motor 100, and a translation mechanism 101. The autonomous work machine 10 also includes travel motors 26, various kinds of sensors S, an electronic control unit (ECU) 44, a charging unit 30, a battery 32, a charging terminal 34, and a notification unit 35.

The cameras 11 for capturing the external world of the autonomous work machine 10 are formed by a plurality of cameras (a left camera 11L and a right camera 11R) that can capture the state at the front of the autonomous work machine 10. Distance information between the autonomous work machine 10 and an object, which is present in the front of the autonomous work machine, can be calculated and obtained by using images captured by the cameras 11 (the left camera 11L and the right camera 11R) which have a parallax between the plurality of cameras. In Figs. 1A and 1B, a set of double dashed chain lines extending in front of each camera 11 (each of the left camera 11L and the right camera 11R) indicates a predetermined angle of view of the camera 11. The ECU 44 can obtain information of the external world of the autonomous work machine 10 from the cameras 11.

Each of the cameras 11 (the left camera 11L and the right camera 11R) is held by a pan angle adjustment mechanism 11b for adjusting an angle in the horizontal direction and a tilt angle adjustment mechanism 11c for adjusting an angle in the vertical direction. The ECU 44 (a control unit C2) can control the angle of each camera 11 by controlling at least one of the pan angle adjustment mechanism 11b and the tilt angle adjustment mechanism 11c.

The vehicle body 12 of the autonomous work machine 10 includes a chassis 12a and a frame 12b attached to the chassis 12a. Two front wheels 14 (a left front wheel 14L and a right front wheel 14R) as left and right small-diameter wheels are fixed to the front part of the chassis 12a via the stay 13. Two rear wheels 16 (a left rear wheel 16L and a right rear wheel 16R) as left and right large-diameter wheels are attached to the rear part of the chassis 12a.

The blade 20 is a rotary blade for lawn mowing attached near the central position of the chassis 12a. The work motor 22 is an electric motor arranged above the blade 20. The blade 20 is connected to and rotated by the work motor 22. The motor holding member 23 holds the work motor 22. The rotation of the motor holding member 23 is regulated with respect to the chassis 12a. In addition, the vertical movement of the motor holding member 23 is permitted by a combination of a guide rail and a slider which can move vertically by being guided by the guide rail.

The blade height adjustment motor 100 is a motor for adjusting the height of the blade 20 in the vertical direction from a ground surface GR. The translation mechanism 101 is connected to the blade height adjustment motor 100, and converts the rotation of the blade height adjustment motor 100 into a vertical translational movement. The translation mechanism 101 is also connected to the motor holding member 23 for holding the work motor 22.

The rotation of the blade height adjustment motor 100 is converted into the translational movement (vertical movement) by the translation mechanism 101, and this translational movement is transmitted to the motor holding member 23. The translational movement (vertical movement) of the motor holding member 23 causes the work motor 22 held by the motor holding member 23 to translationally move (vertically move). The height of the blade 20 from the ground surface GR can be adjusted by the vertical movement of the work motor 22.

The travel motors 26 (a left travel motor 26L and a right travel motor 26R) are two electric motors (motors) attached to the chassis 12a of the autonomous work machine 10. The two electric motors are connected to the left and right rear wheels 16. The left and right rear wheels are independently rotated forward (rotated in an advancing direction) or rotated backward (rotated in a reversing direction) by using the front wheels 14 as driven wheels and the rear wheels 16 as driving wheels. This allows the autonomous work machine 10 to move in various directions.

The charging terminal 34 is a charging terminal installed in the front end position of the frame 12b in the front-and-rear direction, and can receive power from a charging station when connected to a corresponding charging terminal of the charging station. The charging terminal 34 is connected to the charging unit 30 by a wiring line, and the charging unit 30 is connected to the battery 32. The work motor 22, the travel motors 26, and the blade height adjustment motor 100 are also connected to the battery 32, and receive power from the battery 32.

The ECU 44 is an electronic control unit including a microcomputer formed on a circuit board, and controls the operation of the autonomous work machine 10. Details of the ECU 44 will be described later. The notification unit 35 notifies a user of the occurrence of an abnormality in a case in which an abnormality has occurred in the autonomous work machine 10. For example, notification can be performed by sound or display. Alternatively, notification can be performed by outputting an abnormality generation notification to an external device which is wirelessly connected to the autonomous work machine 10. The user can be notified of the occurrence of an abnormality through the external device.

### (Control Block Diagram)

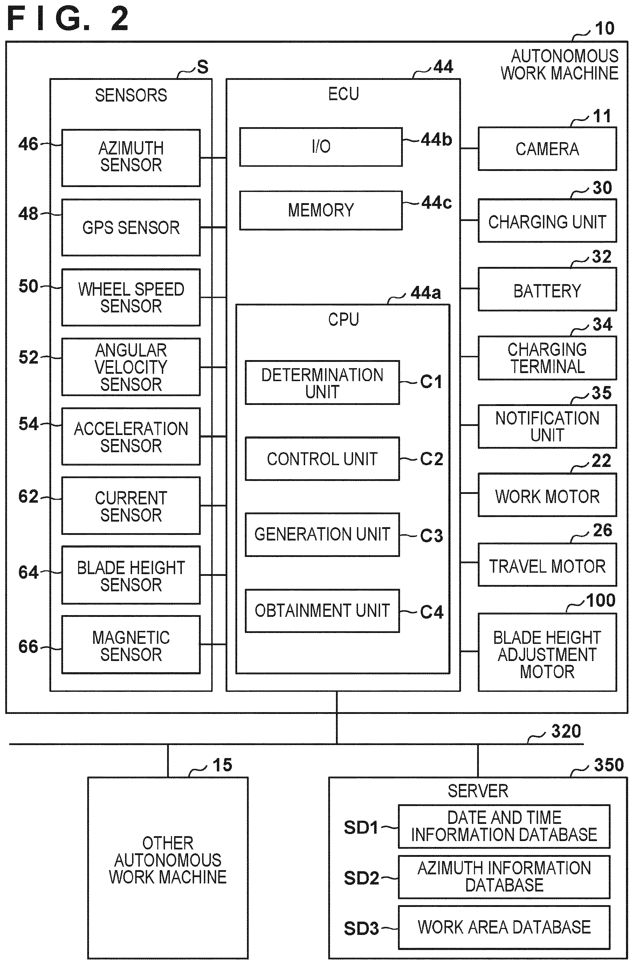

Fig. 2 is a block diagram showing the relationship of inputs/outputs of the electronic control unit (ECU) that controls the autonomous work machine 10. As shown in Fig. 2, the ECU 44 includes a CPU 44a, an I/O 44b, and a memory 44c. The memory 44c functions as a storage unit and is formed by a ROM (Read Only Memory), an EEPROM (Electrically Erasable Programmable Read Only Memory), a RAM (Random Access Memory), or the like.

The memory 44c stores a work schedule of the autonomous work machine 10, information about a work area, various kinds of programs for controlling the operation of the autonomous work machine 10, and an area map that shows the shape of the work area. The autonomous work machine 10 can perform predetermined work in a work area while autonomously traveling in the work area based on the area map of the work area. The ECU 44 can operate as each processing unit for implementing the present invention by reading out and executing a program stored in the memory 44c.

The ECU 44 is connected to the various kinds of sensors S. The sensors S include an azimuth sensor 46, a GPS sensor 48, a wheel speed sensor 50, an angular velocity sensor 52, an acceleration sensor 54, a current sensor 62, a blade height sensor 64, and magnetic sensors 66.

The azimuth sensor 46 and the GPS sensor 48 are sensors for obtaining information of the direction and the position of the autonomous work machine 10. The azimuth sensor 46 detects the azimuth corresponding to the terrestrial magnetism. The GPS sensor 48 receives radio waves from GPS satellites and detects information indicating the current position (the latitude and the longitude) of the autonomous work machine 10.

The wheel speed sensor 50, the angular velocity sensor 52, and the acceleration sensor 54 are sensors for obtaining information on the state of the movement of the autonomous work machine 10. The wheel speed sensor 50 detects the wheel speeds of the left and right rear wheels 16. The angular velocity sensor 52 detects the angular velocity around the vertical axis (the z-axis in the perpendicular direction) in the barycentric position of the autonomous work machine 10. The acceleration sensor 54 detects accelerations in the directions of three perpendicular axes, that is, the x-, y-, and z-axes, which act on the autonomous work machine 10.

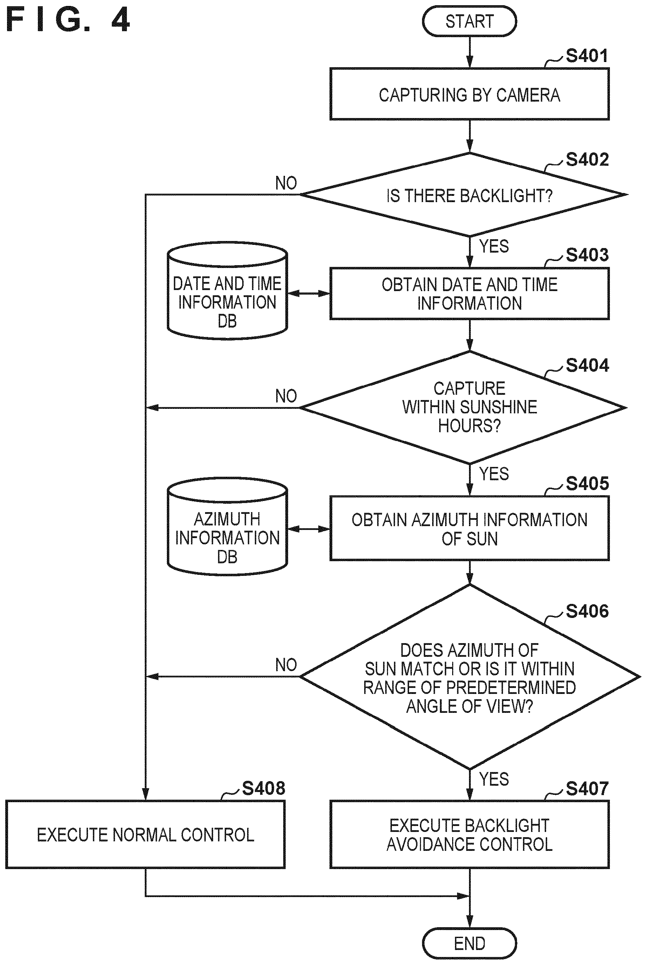

The current sensor 62 detects the current consumption (power consumption) of the battery 32. The detection result of the current consumption (power consumption) is saved in the memory 44c of the ECU 44. When a predetermined power amount is consumed and the power amount stored in the battery 32 becomes equal to or lower than a threshold value, the ECU 44 executes control to return the autonomous work machine 10 to a charging station ST (Fig. 4) in order to charge the autonomous work machine 10.

The blade height sensor 64 detects the height of the blade 20 from the ground surface GR. The blade height sensor 64 outputs the detection result to the ECU 44. Under the control of the ECU 44, the blade height adjustment motor 100 is driven, and the blade 20 vertically moves, thereby adjusting the height from the ground surface GR.

Magnetic sensors 66 (a right magnetic sensor 66R and a left magnetic sensor 66L) are arranged at symmetrical positions to each other in the left-and-right direction of the autonomous work machine 10. Each magnetic sensor outputs a signal indicating the magnitude of the magnetic field (magnetic field strength) to the ECU 44.

The outputs from the various sensors S are input to the ECU 44 via the I/O 44b. Based on the outputs from the various sensors S, the ECU 44 supplies power from the battery 32 to the travel motors 26, the work motor 22, and the height adjustment motor 100. The ECU 44 controls the travel motors 26 by outputting a control value via the I/O 44b, thereby controlling travel of the autonomous work machine 10. The ECU 44 also controls the height adjustment motor 100 by outputting a control value via the I/O 44b, thereby controlling the height of the blade 20. Furthermore, the ECU 44 controls the work motor 22 by outputting a control value via the I/O 44b, thereby controlling the rotation of the blade 20. The I/O 44b can function as a communication interface (communication unit), and can wirelessly communicate with a server 350 via a network 320.

A date and time information database SD1 that stores date and time information which indicates the sunshine hours and an azimuth information database SD2 that stores azimuth information of the sun corresponding to the sunshine hours are stored in the server 350. The date and time information database SD1 and the azimuth information database SD2 are databases stored in advance in the server 350, and the I/O 44b (communication unit) of the autonomous work machine 10 can store (download) the databases SD1 and SD2 obtained from the server 350 in the memory 44c. The CPU 44a can refer to the databases SD1 and SD2 stored in the memory 44c and execute various kinds of processing.

Note that instead of downloading the databases SD1 and SD2 from the server 350, the I/O 44b (communication unit) of the autonomous work machine 10 can also obtain predetermined data by referring to the databases SD1 and SD2 in the server 350 by executing wireless communication with the server 350.

A work area database SD3 that stores backlight information related to a work area where the autonomous work machine 10 will actually work is also stored in the server 350. Here, backlighting refers to a state in which the camera is faced toward the direction of a light source (for example, the sun) or a state in which the camera is faced toward a direction close to the direction of the light source while image capturing of the external world is performed by each camera 11. Backlighting can occur in a state in which the direction (optical axis) of each camera 11 matches the azimuth of the sun or a state in which the sun is positioned within a range of a predetermined angle of view of each camera 11.

In addition, backlight information is information that indicates the generation conditions (the azimuth of the sun and the imaging date and time, the position, and the direction (azimuth) of the autonomous work machine 10 in the work area) of backlighting that occurred in a work area. The work area database SD3 is a database generated based on the information collected while the autonomous work machine 10 is working, and is stored in the memory 44c. The I/O 44b (communication unit) stores the generated work area database SD3 in the storage unit of the server 350. By storing the work area database SD3 in the server 350 on the network 320, the information of the work area database SD3 can be shared among a plurality of autonomous work machines 10 and 15 that are working in the same work area.

In Fig. 2, the other autonomous work machine 15 is an autonomous work machine that works in the same work area as the work area in which the autonomous work machine 10 actually works, and has an arrangement similar to the autonomous work machine 10. The other autonomous work machine 15 can wirelessly communicate with the server 350 via the network 320, and the other autonomous work machine 15 can refer to the work area database SD3 to obtain the backlight information that indicates the conditions in which backlighting occurred in the work area.

The ECU 44 includes a determination unit C1, a control unit C2, a generation unit C3, and an obtainment unit C4 as functional components of the CPU 44a for implementing the present invention by reading out and executing programs stored in the memory 44c. The functional components C1 to C4 of the autonomous work machine 10 will be described in detail later.

The determination unit C1 determines whether backlighting has occurred based on images captured by the cameras 11. Also, the determination unit C1 can further determine whether backlighting has occurred by comparing the imaging date and time information of the autonomous work machine and the date and time information obtained from the date and time information database, which stores the date and time information indicating the sunshine hours. Furthermore, the determination unit C1 can further determine whether backlighting has occurred by comparing the azimuth information obtained from the azimuth information database, which stores the azimuth information of the sun corresponding to the date and time information, and the imaging date and time information, the position information, and the direction information of the autonomous work machine 10.

If the determination unit C1 determines that backlighting has occurred, the control unit C2 will control the autonomous work machine 10 to avoid the backlighting (execution of backlight avoidance control). A more specific example of backlight avoidance control will be described later.

In addition, if the determination unit C1 determines that backlighting has not occurred, the control unit C2 will execute normal control. In this case, the control unit C2 will control the autonomous work machine 10 so that the autonomous work machine will execute predetermined work in a work area AR while autonomously traveling in the work area AR based on set predetermined tracks. Alternatively, when the charge amount of the battery 32 has become equal to or less than a threshold, the control unit C2 will execute control to make the autonomous work machine 10 return to the charging station ST.

The generation unit C3 will generate, when the determination unit C1 has determined the occurrence of backlighting, the work area database SD3 that associates the azimuth information of the sun with the imaging date and time information, the position information, and the direction information of the autonomous work machine 10. After the generation unit C3 has stored the generated work area database SD3 in the memory 44c, the I/O 44b will cause the generated work area database SD3 to be stored in the storage unit of the server 350. By storing the work area database SD3 in the server 350 on the network 320, the information of the work area database SD3 can be shared among the plurality of autonomous work machines that are working in the same work area.

The obtainment unit C4 obtains, based on the date and time information, the azimuth information of the sun, and the imaging date and time information of the autonomous work machine 10, sun information that indicates the position or the azimuth of the sun in which backlighting can occur while the autonomous work machine is traveling in the work area.

### (Usage Example of Autonomous Work Machine 10)

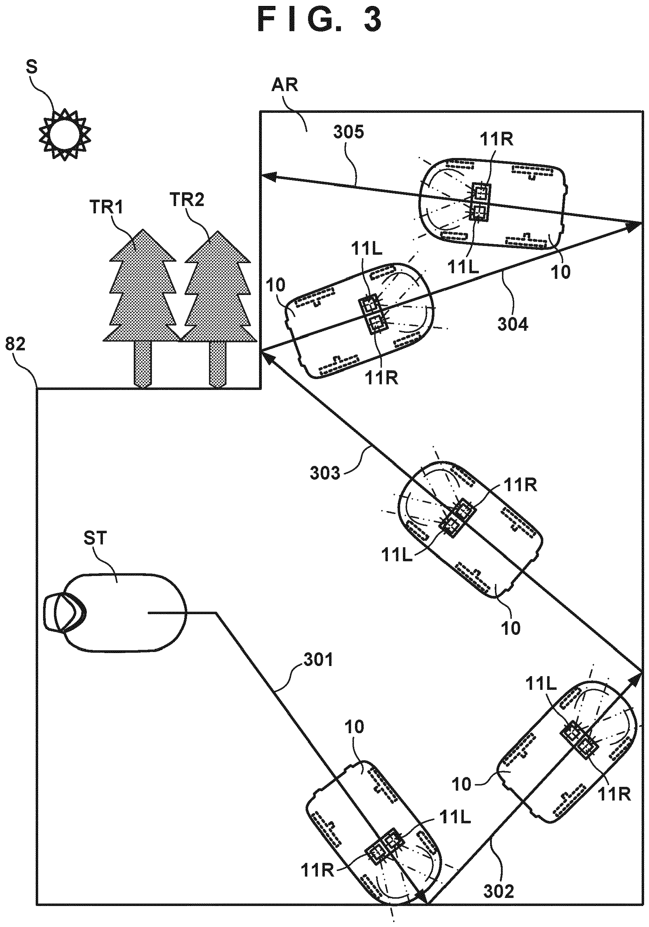

Fig. 3 is a schematic view showing an example of usage of the autonomous work machine 10. As shown in Fig. 3, the work area AR is delineated by an area wire (electrical wire) 82 installed along the perimeter (boundary) of the work area AR. The ECU 44 of the autonomous work machine 10 can recognize (grasp) the boundary of the work area AR by performing, before executing work in the work area AR, a trace travel operation around the perimeter of the work area AR based on the magnetic field of the area wire 82. An area map that indicates the outer shape of the work area is generated by the trace travel operation. The autonomous work machine 10 can execute predetermined work in the work area AR while autonomously traveling in the work area AR in accordance with a generated area map. Note that the autonomous work machine 10 can detect the boundary of the work area AR based on the information from the cameras 11.

The charging station ST for charging the battery 32 included in the autonomous work machine 10 is installed inside the work area AR, and the autonomous work machine 10 that has started moving from the charging station ST will travel in the work area AR along a predetermined track. In Fig. 3, reference symbol S indicates the sun, and reference symbols TR1 and TR2 are trees growing near the boundary of the work area AR.

When the autonomous work machine 10 starts moving from the charging station ST, the cameras 11 (11L and 11R) start capturing the external world. Here, whether backlighting has occurred will be determined by the determination unit C1 based on the images captured by the cameras 11. Tracks 301 and 304 shown in Fig. 3 are tracks in a direction in which the autonomous work machine will move with its back toward the sun S, and backlighting will not occur in the travel along the tracks 301 and 304 since the light from the sun S will not fall in the angle of view of each of the cameras 11 (11L and 11R).

Also, in the travel along a track 302, the sun S will be positioned on the left side of the autonomous work machine 10 with respect to the direction of movement of the autonomous work machine 10. Hence, backlighting will not occur because the light from the sun S will not fall in the angle of view of each of the cameras 11 (11L and 11R).

The travel along a track 303 is a movement toward the direction of the sun S. However, in a case in which the light from the sun S is shielded by the trees TR1 and TR2 near the boundary of the work area AR, backlighting will not occur because the light from the sun S will not fall in the angle of view of each of the cameras 11 (11L and 11R).

However, since the latitude and the longitude of the sun S will differ depending on the date and time (month, day, and time) even when the same track 303 is to be traveled, there can be a case in which backlighting will occur because the light from the sun S will fall in the angle of view of each of the cameras 11 (11L and 11R) without being influenced by the trees TR1 and TR2. If the determination unit C1 determines that backlighting has occurred, the generation unit C3 will store, in the work area database SD3, information obtained by associating the azimuth information of the sun with the imaging date and time information, the position information, and the direction information of the autonomous work machine 10. As a result, the generation conditions (the azimuth of the sun and the imaging date and time, the position, and the direction (azimuth) of the autonomous work machine 10 in the work area) of the backlighting that occurred in the work area AR can be accumulated as unique information of the work area AR. Hence, it will be possible to more accurately determine whether backlighting has occurred in accordance with the actual state of the work by referring to the work area database SD3, and this determination can be reflected in the backlight suppression control. If the determination unit C1 determines that backlighting has occurred, the control unit C2 will control the autonomous work machine 10 to avoid the backlighting (execution of backlight avoidance control).

Travel along a track 305 is a movement toward the direction of the sun S. Since the light from the sun S will not be shielded by the trees TR1 and TR2 in the track 305, backlighting can occur because the light from the sun S will fall in the angle of view of each of the cameras 11 (11L and 11R).

In a case in which the determination unit C1 determines that the backlighting has occurred, the generation unit C3 will store, in the work area database SD3 of the memory 44c, the information obtained by associating the azimuth information of the sun with the imaging date and time information, the position information, and the direction information of the autonomous work machine 10. Subsequently, when the determination unit C1 determines that backlighting has occurred, the control unit C2 will control the autonomous work machine 10 to avoid the backlighting (execution of backlight avoidance control).

### (Processing Procedure of Autonomous Work Machine 10)

Fig. 4 is a flowchart for explaining the processing procedure executed by the autonomous work machine 10. The processing procedure of Fig. 4 is executed by the functional components (the determination unit C1, the control unit C2, and the generation unit C3) under the overall control of the ECU 44 of the autonomous work machine 10 shown in Fig. 2.

First, in step S401, when the autonomous work machine 10 starts moving from the charging station ST, the cameras 11 (11L and 11R) will start capturing the external world. Each camera 11 can capture a moving image at a predetermined frame rate, and the images captured by the cameras 11 (11L and 11R) are input to the determination unit C1 and the ECU 44 via the I/O 44b.

In step S402, whether backlighting has occurred is determined by the determination unit C1 based on an image captured by each camera 11. Determination conditions are, for example, (1) a case in which an extremely bright portion that exceeds a predetermined threshold is present in the image, (2) a case in which there is no parallax between the left camera 11L and the right camera 11R and an object cannot be recognized in the image (a case in which distance information between the autonomous work machine 10 and the object cannot be obtained), (3) a case in which the captured image matches or is similar to a glare image, which indicates a scene of a backlit state pre-registered in the memory 44c, within a range of a predetermined similarity, (4) a case in which the periphery of a bright portion is dark and the difference between the bright portion and the dark portion is equal to or more than a predetermined threshold in the image, (5) a case in which the white balance exceeds a predetermined threshold, and the like. Whether backlighting has occurred can be determined by the determination unit C1 based on these determination conditions (1) to (5).

If the determination unit C1 determines that backlighting has not occurred (NO in step S402), the control unit C2 will advance the process to step S408, and the control unit C2 will execute normal control in step S408. That is, based on the set predetermined tracks (for example, the track 301 to track 304 of Fig. 3), the control unit C2 will control the autonomous work machine 10 so that the autonomous work machine will execute predetermined work while autonomously traveling in the work area AR. Alternatively, in a case in which the charge amount of the battery 32 has become equal to or less than the threshold, the autonomous work machine 10 will be controlled to return to the charging station ST.

On the other hand, if the determination unit C1 determines that backlighting has occurred in the determination process of step S402, the process advances to step S403.

In step S403, the determination unit C1 obtains the date and time information. The determination unit C1 may obtain the date and time information by, for example, referring to the date and time information database SD1 of the server 350 or by obtaining the date and time information downloaded in the memory 44c.

In step S404, the determination unit C1 determines whether image capturing by the cameras 11 has been performed within sunshine hours. The determination unit C1 can obtain, based on the work schedule of the autonomous work machine 10 stored in the memory 44c or the information of an internal clock included in the CPU 44a, the information (imaging date and time information) of the date and the time of the image capturing operation when the image capturing is actually performed.

The determination unit C1 determines whether the image capturing operation is an image capturing operation performed within sunshine hours by comparing the imaging date and time information of the autonomous work machine 10 with the date and time information obtained from the date and time information database SD1, which stores the date and time information indicating the sunshine hours. For example, in a case in which sunshine hours are defined to be T1 (6:00) to T2 (18:00) as sunshine information when the imaging date is X (month)/Y (day), backlighting can occur if the imaging date and time information (an imaging time T3 of X (month)/Y (day) (for example, 14:00)) of the autonomous work machine 10 is within the sunshine hours. In such a case, the determination unit C1 will determine that backlighting has occurred (YES in step S404), and advance the process to step S405.

On the other hand, since backlighting cannot occur if the imaging time T3 (for example, 5:30 or 18:30) of the autonomous work machine 10 is outside the sunshine hours, the detection can be determined to be a detection error. In this case, the determination unit C1 will determine that backlighting has not occurred (NO in step S404), and the control unit C2 will advance the process to step S408 to execute normal control.

Note that backlighting can also occur when the state of the external world changes. For example, if the trees that shield the sunlight have grown, a state in which backlighting will not occur even during the sunshine hours can be generated. Also, on the other hand, even in a case in which backlighting did not occur in a previous state, if the trees in the periphery of the work area are cut down, a state in which backlighting will occur can be generated. Cases in which backlighting will occur or not occur can be generated in accordance with various kinds of changes in the state of the external world, such as building of a new house, demolishing of a house, or the like in the vicinity of the work area. When a detection error has been determined for a predetermined number of times, the determination unit C1 will determine that the state of the external world has changed and update the information of the work area database SD3. As a result, each change in the state of the external world of each individual work area to be worked by the autonomous work machine 10 can be reflected in the backlighting determination result.

In step S405, the determination unit C1 obtains the azimuth information of the sun. The determination unit C1 may obtain the azimuth information of the sun by, for example, referring to the azimuth information database SD2 of the server 350 or by obtaining the azimuth information downloaded in the memory 44c.

In step S406, the determination unit C1 compares the imaging date and time information, the position information, and the direction information of the autonomous work machine 10 with the azimuth information obtained from the azimuth information database SD2, which stores the azimuth information of the sun corresponding to the date and time information. As a result of the comparison, if the azimuth of the sun S matches the direction of each camera 11 or the azimuth of the sun S falls within a predetermined range of the angle of view of each of the cameras 11 (11L and 11R), it can be determined that backlighting will occur. In such a case, the determination unit C1 will determine that backlighting has occurred (YES in step S406), and advance the process to step S407.

On the other hand, as a result of the comparison, if the azimuth of the sun S does not match the direction of each camera 11 or the azimuth of the sun S falls outside the range of the predetermined angle of view of each of the cameras 11 (11L and 11R), the detection can be determined to be an detection error because backlighting will not occur. In such a case, the determination unit C1 will determine that backlighting has not occurred (NO in step S406), and the control unit C2 will advance the process to step S408 to execute normal control.

In step S407, if the determination unit C1 has determined that backlighting has occurred, the control unit C2 will control the autonomous work machine 10 to avoid the backlighting (execution of backlight avoidance control).

### (More Specific Example of Backlight Avoidance Control)

### (On-The-Spot Turn and Traveling While Turning)

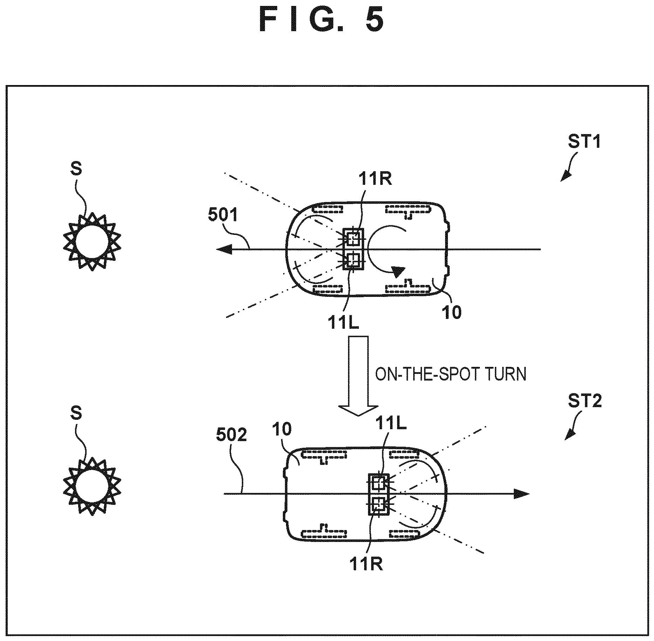

A more specific example of backlight avoidance control will be described with reference to Figs. 5 to 8. In a case in which the determination unit C1 has determined that backlighting has occurred, the control unit C2 will cause the autonomous work machine 10 to turn so as to prevent the sun from falling within the range of the angle of view of each camera 11. Two turn modes, an on-the-spot turn mode and an advancing-while-turning mode, are used here to execute a turn.

Fig. 5 is a view for schematically explaining the on-the-spot turn mode. In Fig. 5, a state ST1 shows a state in which the determination unit C1 has determined that backlighting has occurred while the autonomous work machine 10 is traveling along a track 501. In this case, the control unit C2 will make the autonomous work machine 10 turn on the spot where it is present on the track 501 to prevent the sun from falling within the range of the angle of view of each of the cameras 11 (11L and 11R). A state ST2 shows a state in which the autonomous work machine 10 has made an on-the-spot turn on the track 501. The autonomous work machine 10 that has made the on-the-spot turn will travel along a track 502 (move with its back toward the sun S) which is in the reverse direction of the track 501. Since the azimuth of the sun S will fall outside the range of the angle of view of each of the cameras 11 (11L and 11R), backlighting can be avoided.

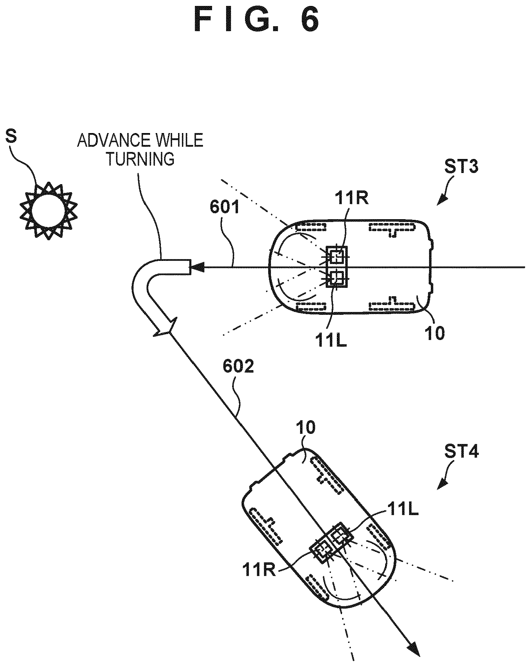

Fig. 6 is a view for schematically explaining the advancing-while-turning mode. In Fig. 6, a state ST3 shows a state in which the determination unit C1 has determined that backlighting has occurred while the autonomous work machine 10 is traveling along a track 601. In this case, the control unit C2 will control the autonomous work machine 10 to advance while taking a track for turning so the sun will not fall within the range of the angle of view of each of the cameras 11 (11L and 11R). A state ST4 shows a state in which the autonomous work machine 10 is traveling along a track 602 after turning. The autonomous work machine 10 that advances while turning travels along the track 602 which is in a direction in which the autonomous work machine will move with its back toward the sun S. Since the azimuth of the sun S will fall outside the range of the angle of view of each of the cameras 11 (11L and 11R), backlighting can be avoided.

By controlling the autonomous work machine 10 so that the autonomous work machine will turn on the spot or travel while turning, the autonomous work machine can avoid being backlit while continuing work in the work area AR. As a result, it will be possible to prevent a detection error in the external world information.

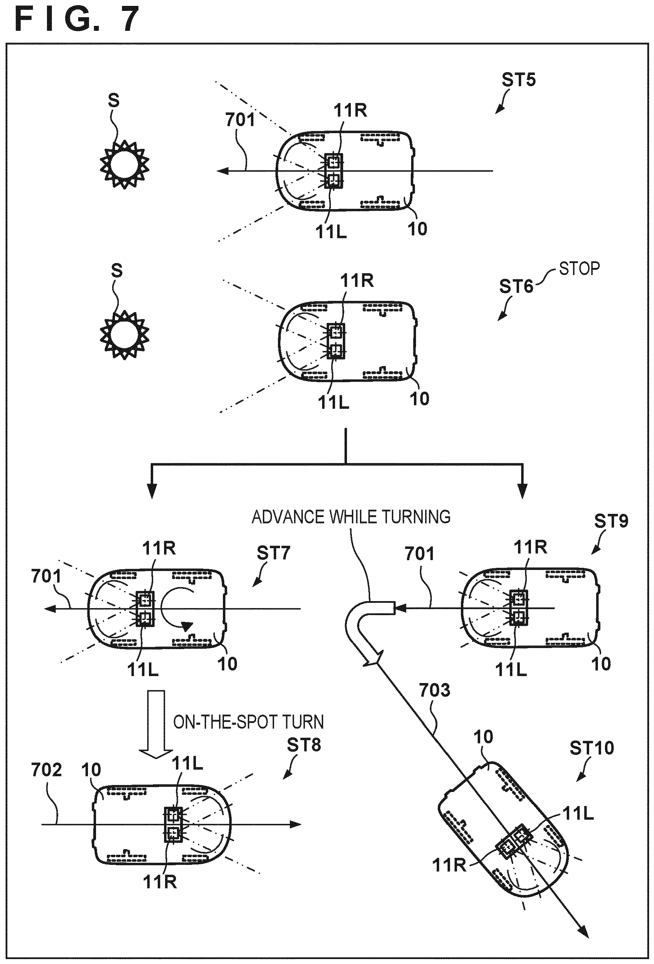

Fig. 7 is a view for schematically explaining control for stopping the autonomous work machine 10 and determining which turn mode to transition before transitioning to the on-the-spot turn mode or the advancing-while-turning mode.

In Fig. 7, a state ST5 shows a state in which the determination unit C1 has determined that backlighting as occurred while the autonomous work machine 10 is traveling along the track 501. A state ST6 shows a state in which the control unit C2 has stopped the autonomous work machine 10 when the determination unit C1 has determined that the backlighting has occurred. In this case, the control unit C2 will select either the on-the-spot turn mode or the advancing-while-turning mode based on the position and the direction (azimuth) of the autonomous work machine 10, the azimuth information of the sun S, and the date and time information. For example, in a case in which the sun S is positioned at an azimuth toward the front of the autonomous work machine 10, the on-the-spot turn mode will be selected since the autonomous work machine 10 will move with its back toward the sun S. Alternatively, in a case in which the sun S is positioned at an azimuth toward the side of the autonomous work machine 10, the advancing-while-turning mode will be selected so that the autonomous work machine will move with its back toward the sun S.

The state will transition to states ST7 and ST8 in a case in which the on-the-spot turn mode is selected. The state ST7 shows a state in which the autonomous work machine has started to turn from the state of the state ST6 (stopped state). In this case, the control unit C2 will control the autonomous work machine 10 to make an on-the-spot turn on a track 701 so the sun will not fall within the range of the angle of view of each of the cameras 11 (11L and 11R). The state ST8 shows a state in which the autonomous work machine 10 has made an on-the-spot turn on the track 701. The autonomous work machine 10 that has made an on-the-spot turn will travel (move with its back toward the sun S) along a track 702 in the reverse direction of the track 701. Since the azimuth of the sun S will fall outside the range of the angle of view of each of the cameras 11 (11L and 11R), backlighting can be avoided.

The state will transition to states ST9 and ST10 in a case in which the advancing-while-turning mode is selected. The state ST9 shows a control state in which the autonomous work machine 10 has started moving along the track 701 from the state ST6 (stopped state) and advances while taking a track for turning so the sun S will not fall within the range of the angle of view of each of the cameras 11 (11L and 11R). The state ST10 shows a state in which the autonomous work machine 10 is traveling along a track 703 after turning. The autonomous work machine 10 that advances while turning will travel along the track 703 in a direction in which the autonomous work machine will move with its back toward the sun S. Since the azimuth of the sun S will fall outside the range of the angle of view of each of the cameras 11 (11L and 11R), backlighting can be avoided. Since the control of the autonomous work machine is started to avoid the backlighting after temporarily stopping, it will be possible to obtain the information of the external world with greater accuracy than a case in which control for avoiding the backlight is performed while the autonomous work machine is moving, and the autonomous work machine can be controlled based on the obtained external world information. However, the temporary stop may also be omitted.

### (Track Correction after Turn)

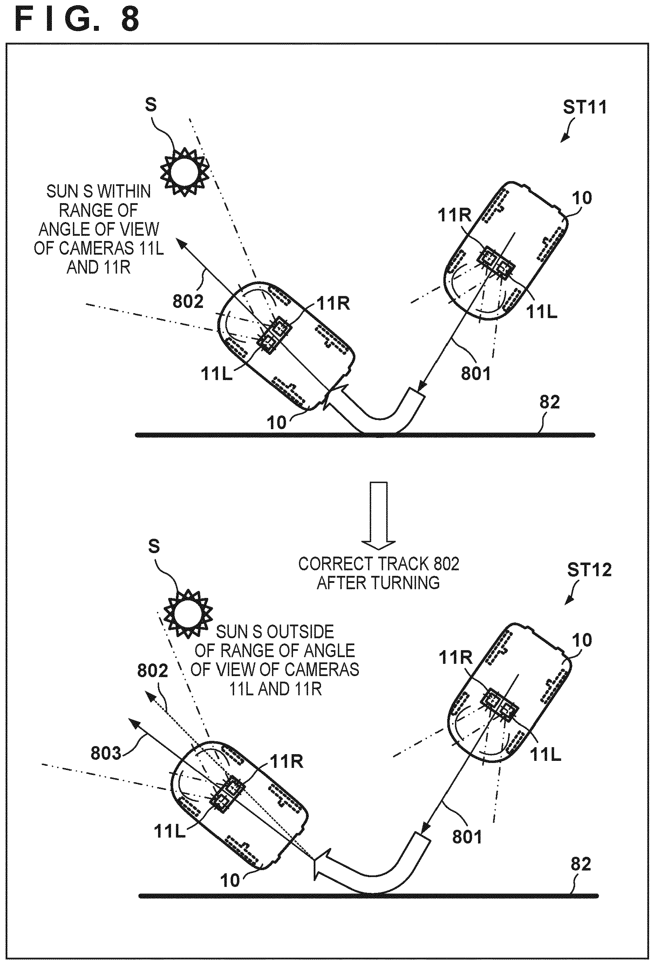

Fig. 8 is a view for schematically explaining control for correcting a track by backlight avoidance control after a turn has been performed under normal control. A state ST11 shows a state in which the autonomous work machine 10 is traveling along a track 801 and sets, when the autonomous work machine has come close to the boundary (the area wire 82) of the work area AR, a track 802 to turn at a predetermined turning angle. In a case in which the autonomous work machine 10 travels along the track 802, the sun S will fall within the range of the angle of view of each of the cameras 11 (11L and 11R), and backlighting will occur in the travel along the track 802.

A state ST12 shows a state in which the control unit C2 has corrected, when the determination unit C1 has determined that backlighting has occurred in the track 802, the preset track 802 into a track 803 in which the turning angle has been returned to a direction in which backlighting can be avoided. In a case in which the autonomous work machine 10 travels along the corrected track 803, the sun S will not fall within the range of the angle of view of each of the cameras 11 (11L and 11R), and backlighting can be avoided.

If the autonomous work machine continues to travel based on a track that does not travel toward the sun S, it may skew a worked area in the work area. However, by correcting the preset track 802 into the track 803 set by returning the turning angle to a direction that will barely make the position of the sun S fall outside of a backlighting position, the skewing of the worked area can be prevented.

### (Modification)

The first embodiment described, as an example of backlight avoidance control, an example in which the autonomous work machine 10 is made to turn or the track after the turn is corrected. However, the direction of each of the cameras 11 (11L and 11R) may also be corrected. In a case in which the determination unit C1 has determined that backlighting has occurred, the control unit C2 can control the angle of each of the cameras 11 (11L and 11R) so that the sun will not fall within the range of the angle of view of each of the cameras 11 (11L and 11R). Each of the cameras 11 (11L and 11R is held by the pan angle adjustment mechanism 11b for adjusting the angle in the horizontal direction and the tilt angle adjustment mechanism 11c for adjusting the angle in the vertical direction. The control unit C2 can control at least one of the pan angle adjustment mechanism 11b and the tilt angle adjustment mechanism 11c and control the angle of each of the cameras 11 (11L and 11R) to avoid backlighting. For example, the pan angle adjustment mechanism 11b can change the angle of each camera 11 in the horizontal direction or the tilt angle adjustment mechanism 11c can change the angle of each camera 11 in a downward direction. By avoiding backlighting by controlling the angle of each camera while continuing the execution of work, it will be possible to prevent a detection error in the external world information.

### <Second Embodiment>

The first embodiment descried an arrangement in which a determination unit C1 determines whether backlighting has occurred and an autonomous work machine 10 is controlled to avoid backlighting when the occurrence of backlighting was determined. The second embodiment will describe an arrangement in which a control unit C2 will set the track of the autonomous work machine 10 so that backlighting can be avoided. The arrangement of the autonomous work machine 10 is similar to that of the first embodiment. In this embodiment, as a functional component of the autonomous work machine 10, an obtainment unit C4 will obtain, before the autonomous work machine starts traveling and based on the date and time information, the azimuth information of the sun, and the imaging date and time information of the autonomous work machine 10, sun information that indicates the position or the azimuth of the sun which will be in a backlighting position when the autonomous work machine travels in a work area. The control unit C2 sets, based on the sun information obtained by the obtainment unit C4, a track that will allow the autonomous work machine 10 to avoid backlighting.

### (Processing Procedure of Autonomous Work Machine 10)

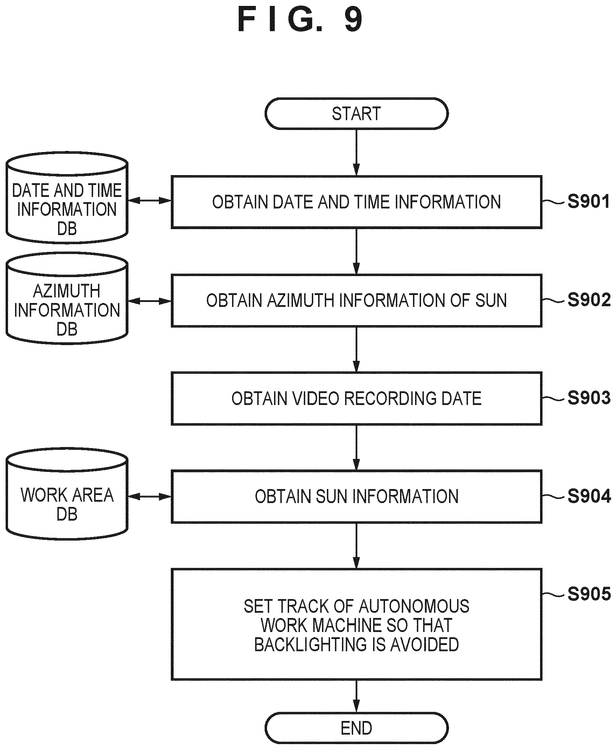

Fig. 9 is a flowchart for explaining the processing procedure executed by the autonomous work machine 10. The processing procedure of Fig. 9 is executed by the functional components (the control unit C2, a generation unit C3, and the obtainment unit C4) under the overall control of an ECU 44 of the autonomous work machine 10 shown in Fig. 2.

In step S901, the obtainment unit C4 obtains the date and time information. The obtainment unit C4 can obtain the date and time information by, for example, referring to a date and time information database SD1 of a server 350 or by obtaining the date and time information downloaded in a memory 44c.

In step S902, the obtainment unit C4 obtains the azimuth information of the sun corresponding to the date and time information. The obtainment unit C4 can obtain the azimuth information of the sun by, for example, referring to an azimuth information database SD2 of the server 350 or by obtaining the azimuth information downloaded in the memory 44c.

In step S903, the obtainment unit C4 obtains the imaging date and time information of the autonomous work machine 10. The obtainment unit C4 obtains, based on the work schedule of the autonomous work machine 10 stored in the memory 44c or the information of an internal clock included in a CPU 44a, the information (imaging date and time information) of the date and the time of the image capturing operation when the image capturing is actually performed.

In step S904, before the start of the travel and based on the date and time information obtained in step S901, the azimuth information of the sun obtained in step S902, and the imaging date and time information of the autonomous work machine 10 obtained in step S903, the sun information that indicates the position or the azimuth of the sun, which is to be in a backlighting position when the autonomous work machine is to travel in a work area AR, is obtained by the obtainment unit C4.

Also, in a case in which it is determined, after the autonomous work machine has started traveling, that a track in which backlighting will occur is present among the set tracks while the autonomous work machine is traveling in the work area AR, the generation unit C3 will generate, as the sun information, information obtained by associating the azimuth information of the sun with the imaging date and time information and the position information and the direction information on the track of the autonomous work machine 10. After the generation unit C3 has stored the generated sun information in the work area database of the memory 44c, an I/O 44b (communication unit) will cause the generated sun information to be stored in a storage unit (a work area database SD3) of the server 350.

The sun information collected/generated during the travel in the work area AR is accumulated in the work area database SD3, and the obtainment unit C4 can obtain the sun information by referring to the work area database SD3 of the server 350.

Note that in a case in which the sun information is stored in the work area database SD3 of the server 350 in the state before the autonomous work machine starts traveling, the sun information can be obtained by referring to the work area database SD3 of the server 350 regardless of the processes of step S901 to step S903.

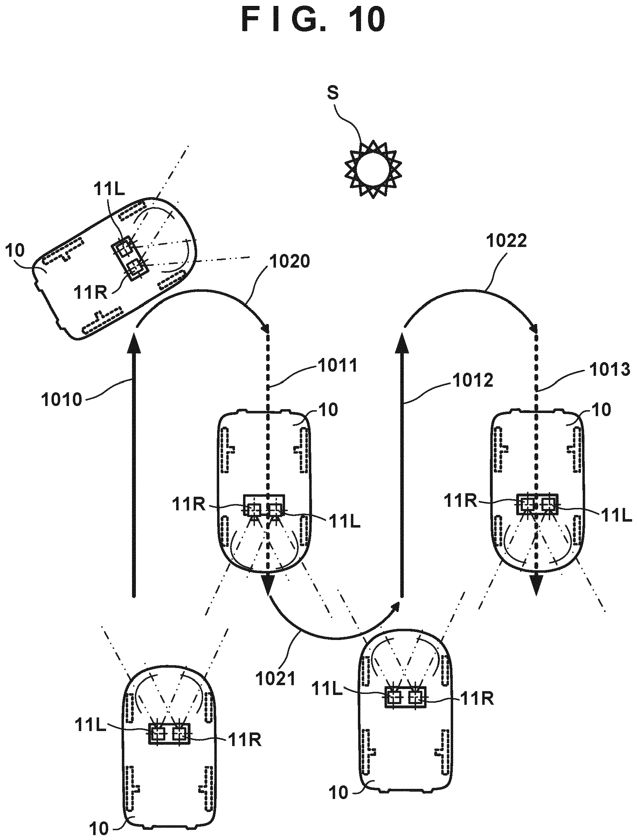

Fig. 10 is a view for schematically explaining a case in which backlighting will occur when the autonomous work machine is traveling in the work area AR. In Fig. 10, tracks 1010 and 1012 indicated by solid lines are tracks toward a sun S, tracks 1020, 1021, and 1022 are tracks for turning, and tracks 1011 and 1013 indicated by broken lines are tracks in which the back of the autonomous work machine will be toward the sun S.

In Fig. 10, in a case in which the autonomous work machine is to travel along the tracks 1011 and 1013, the sun S will not fall within the range of the angle of view of each of the cameras 11 (11L and 11R), and backlighting will not occur. However, in a case in which the autonomous work machine travels along the tracks 1010 and 1012, the sun S will fall within the range of the angle of view of each of the cameras 11 (11L and 11R), and backlighting will occur. In addition, the sun S will fall within the range of the angle of view of each of the cameras 11 (11L and 11R) on the track for turning of the tracks 1020 and 1022, and backlighting will occur if the autonomous work machine travels along the track 1020. In the tracks shown in Fig. 10, the sun S will fall within the range of the angle of view of each of the cameras 11 (11L and 11R) four times (the tracks 1010, 1020, 1012, and 1022), and the duration of backlighting in each of the linear tracks 1010 and 1012, with a longer travel distance than a track for turning, will be longer than that of the track for turning.

In step S905, the control unit C2 will use the sun information obtained by the obtainment unit C4 to set each track of the autonomous work machine 10 so that backlighting can be avoided. The control unit C2 sets the track so that the duration of backlighting or the number of times in which the sun S will fall into the range of the angle of view of each of the cameras 11 (11L and 11R) will be reduced.

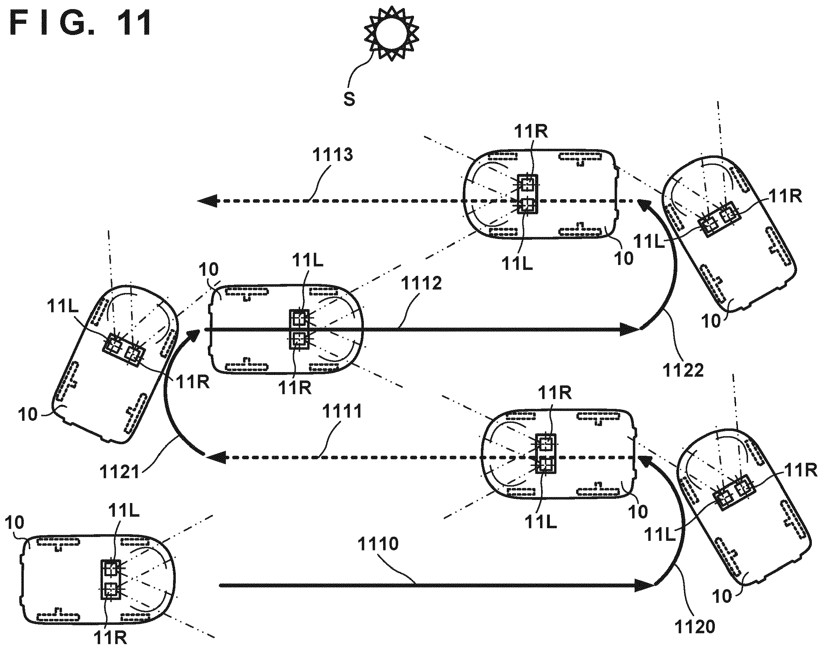

Fig. 11 is a view for schematically explaining the setting of a track that avoids backlighting. The control unit C2 sets the track so as to prevent a track in which the autonomous work machine will be faced toward the sun S. In Fig. 11, tracks 1110 and 1112 are tracks in which the sun S is positioned to the left side of the autonomous work machine 10. When the autonomous work machine travels along the tracks 1110 and 1112, the sun S will not fall within the range of the angle of view of each of the cameras 11 (11L and 11R), and backlighting will not occur. In addition, tracks 1111 and 1113 indicated by broken lines are tracks in which the position of the sun S is on the right side of the autonomous work machine 10. Even when the autonomous work machine travels along the tracks 1111 and 1113, the sun S will not fall within the range of the angle of view of each of the cameras 11 (11L and 11R) c11, and backlighting will not occur.

Among the tracks shown in Fig. 11, a track that transitions from the track 1110 indicated by a solid line to the track 1111 indicated by broken lines is a track for turning. Also, a track 1121 is a track for turning that transitions from the track 1111 indicated by broken lines to the track 1112 indicated by a solid lines, and a track 1122 is a track for turning that transitions from the track 1112 indicated by a solid line to the track 1113 indicated by broken lines. On these tracks for turning, the sun S will fall within the range of the angle of view of each of the cameras 11 (11L and 11R), and backlighting will occur in the travel along a track 1120, the track 1121, and the track 1122.

In the tracks shown in Fig. 11, since the sun S falls into the angle of view of each of the cameras 11 (11L and 11R) three times (the tracks 1120, 1121, and 1122) and backlighting will not occur in the manner of the linear tracks 1010 and 1012 as shown in Fig. 10, the duration of backlighting will be shorter than that of the tracks (the tracks 1010, 1020, 1012, and 1022) of Fig. 10. Track setting by the control unit C2 allows backlighting to be avoided by a simple method.

### (Camera Angle Control in Synchronization with Track Setting)

In Fig. 11, in the tracks 1120, 1121, and 1122 in which backlighting occurs, the control unit C2 can control the angle of each of the cameras 11 (11L and 11R) so the sun S will not fall within the range of the angle of view of each of the cameras 11 (11L and 11R). Each of the cameras 11 (11L and 11R) is held by a pan angle adjustment mechanism 11b for adjusting the angle in the horizontal direction and a tilt angle adjustment mechanism 11c for adjusting the angle in the vertical direction. The control unit C2 can control at least one of the pan angle adjustment mechanism 11b and the tilt angle adjustment mechanism 11c to control the angle of each of the cameras 11 (11L and 11R) to avoid backlighting.

The control unit C2 will control the angle of each of the cameras 11 (11L and 11R) in accordance with each of the set tracks (1110, 1111, 1112, and 1113). For example, the pan angle adjustment mechanism 11b can change the angle of each camera 11 in the horizontal direction or the tilt angle adjustment mechanism 11c can change the angle of each camera 11 in a downward direction, in accordance with the set track. By executing camera angle control in synchronization with the track setting of the control unit C2, the angle of each camera can be controlled in advance, together with the setting of the track, so as to prevent the sun from falling within the range of the angle of view of each camera. As a result, travel that avoids backlighting can be performed in a track set based on the sun information.

### <Other Embodiments>

A program that implements the functions of one or more autonomous work machines described in the embodiment is supplied to a system or an apparatus via a network or a storage medium, and one or more processors in the computer of the system or the apparatus can load and execute the program. The present invention can also be implemented by such a mode.

### REFERENCE SIGNS LIST

S: sun, AR: work area, 10: autonomous work machine 10, 11: camera (11L: left camera, 11R: right camera), 11b: pan angle adjustment mechanism, 11c: tilt angle adjustment mechanism, C1: determination unit, C2: control unit, C3: generation unit, C4: obtainment unit, SD1: date and time information database, SD2: azimuth information database, SD3: work area database

## Claims

1. A system of autonomous work machines comprising a plurality of autonomous work machines working in the same area, a network (320) and a server (350), wherein an autonomous work machine (10) that includes a camera (11,11R,11L) configured to capture an image of an external world, the autonomous work machine (10) comprising:
a communication unit (44b) configured to be capable of wireless communication with the server via the network (320);
an obtainment unit (C4) configured to obtain, based on date and time information, azimuth information of the sun (S), and imaging date and time information of the autonomous work machine (10), sun information that indicates one of a position and an azimuth of the sun (S) in which backlighting can occur while the autonomous work machine (10) is traveling in a work area (AR);
a generation unit (C3) configured to generate, as the sun information in a case in which a track (305,801,1120,1121,1122) in which backlighting will occur is present among the set tracks (301,302,303,304,305, 801,802, 1110, 1120, 1111, 1121, 1112, 1122, 1113) while the autonomous work machine (10) is traveling in the work area (AR), information obtained by associating the azimuth information of the sun (S) with the imaging date and time information and position information and direction information on the track (301,302,303,304,305, 801,802, 1110, 1120, 1111, 1121, 1112, 1122, 1113) of the autonomous work machine (10); and
a control unit (C2) configured to set, based on the sun information generated by the generation unit (C3), tracks (1010,1012,1110,1111,1112,1113,1120,1121,1122) by which the autonomous work machine (10) will avoid backlighting,
**characterized by**
the communication unit (44b) causes a database (SD3) in the server (350) to store the sun information generated by the generation unit (C3),
the obtainment unit (C4) obtains the sun information stored in the database (SD3), and
the sun information stored in the database (SD3) is shared among the plurality of autonomous work machines (10) that are working in the same work area (AR).

2. The system according to claim 1, **characterized in that** the control unit (C2) sets the tracks (301,302,303,304,305, 801,802, 1110,1120,1111,1121,1112,1122,1113) to reduce one of the number of times in which the sun (S) will fall in an angle of view of the camera (11,11R,11L) and a duration of the backlighting.

3. The system according to claim 1 or 2, **characterized in that** the camera (11,11R,11L) is held by a pan angle adjustment mechanism (11b) configured to adjust an angle in a horizontal direction and a tilt angle adjustment mechanism (11c) configured to adjust an angle in a vertical direction, and
the control unit (C2) will control at least one of the pan angle adjustment mechanism (11b) and the tilt angle adjustment mechanism (11c) to control the angle of the camera (11,11R,11L).

4. The system according to claim 3, **characterized in that** the control unit (C2) controls the angle of the camera (11, 11R, 11L) in accordance with the set tracks (301,302,303,304,305, 801,802, 1110,1120,1111,1121,1112,1122,1113).

5. A method of controlling a system of autonomous work machines comprising a plurality of autonomous work machines working in the same area, a network (320) and a server (350), wherein an autonomous work machine (10) that includes a communication unit (44b) configured to be capable of wireless communication with the server (350) via the network (320), and a camera (11, 11R, 11L) configured to capture an image of an external world, the method comprising:
an obtainment step (S904) of obtaining, based on date and time information, azimuth information of the sun (S), and imaging date and time information of the autonomous work machine (10), sun information that indicates one of a position and an azimuth of the sun (S) in which backlighting can occur while the autonomous work machine (10) is traveling in a work area (AR);
a generation step (C3) of generating, as the sun information in a case in which a track (305,801,1120,1121,1122) in which backlighting will occur is present among the set tracks (301,302,303,304,305, 801,802, 1110, 1120, 1111, 1121, 1112, 1122, 1113) while the autonomous work machine (10) is traveling in the work area (AR), information obtained by associating the azimuth information of the sun (S) with the imaging date and time information and position information and direction information on the track (301,302,303,304,305, 801,802, 1110, 1120, 1111, 1121, 1112, 1122, 1113) of the autonomous work machine (10); and
a control step (S905) of setting, based on the sun information obtained in the obtainment step, tracks (1010,1012,1110,1111,1112,1113,1120,1121,1122) by which the autonomous work machine (10) will avoid backlighting,
**characterized by**
the communication unit (44b) causes a database (SD3) in the server (350) to store the sun information generated in the generation step (C3), the sun information stored in the database (SD3) is obtained and the sun information stored in the database (SD3) is shared among the plurality of autonomous work machines (10) that are working in the same work area (AR).

6. A program comprising instructions to cause the system of claim 1 to execute the steps of the method of claim 5.

## Patentansprüche

1. System von autonomen Arbeitsmaschinen, das eine Vielzahl von autonomen Arbeitsmaschinen, die in demselben Bereich arbeiten, ein Netzwerk (320) und einen Server (350) umfasst, wobei eine autonome Arbeitsmaschine (10), die eine Kamera (11, 11R, 11L) enthält, die so konfiguriert ist, dass sie ein Bild einer externen Welt erfasst, wobei die autonome Arbeitsmaschine (10) umfasst:
eine Kommunikationseinheit (44b), die so konfiguriert ist, dass sie zur drahtlosen Kommunikation mit dem Server über das Netzwerk (320) in der Lage ist;
eine Erfassungseinheit (C4), die so konfiguriert ist, dass sie auf der Grundlage von Datums- und Zeitinformationen, Azimutinformationen der Sonne (S) und Bildgebungsdatums- und Zeitinformationen der autonomen Arbeitsmaschine (10) Sonneninformationen erhält, die entweder eine Position oder einen Azimut der Sonne (S) angeben, in dem eine Hintergrundbeleuchtung auftreten kann, während sich die autonome Arbeitsmaschine (10) in einem Arbeitsbereich (AR) bewegt;
eine Erzeugungseinheit (C3), die konfiguriert ist, um als die Sonneninformation in einem Fall, in dem ein Weg (305, 801, 1120, 1121, 1122), in dem eine Hintergrundbeleuchtung auftreten wird, unter den eingestellten Wgen (301, 302, 303, 304, 305, 801, 802, 1110, 1120, 1111, 1121, 1112, 1122, 1113) vorhanden ist, während die autonome Arbeitsmaschine (10) in dem Arbeitsbereich (AR) fährt, Informationen zu erzeugen, die durch Assoziieren der Azimut-Informationen der Sonne (S) mit den Bildgebungs-Datums- und Zeit-Informationen und Positions-Informationen und Richtungs-Informationen auf dem Weg (301, 302, 303, 304, 305, 801, 802, 1110, 1120, 1111, 1121, 1112, 1122, 1113) der autonomen Arbeitsmaschine (10) erhalten werden; und
eine Steuereinheit (C2), die so konfiguriert ist, dass sie auf der Grundlage der von der Erzeugungseinheit (C3) erzeugten Sonneninformationen Wege (1010, 1012, 1110, 1111, 1112, 1113, 1120, 1121, 1122) festlegt, mit denen die autonome Arbeitsmaschine (10) eine Hintergrundbeleuchtung vermeidet,
**gekennzeichnet dadurch, dass**
die Kommunikationseinheit (44b) eine Datenbank (SD3) veranlasst in dem Server (350), die von der Erzeugungseinheit (C3) erzeugten Sonneninformationen zu speichern,
die Erfassungseinheit (C4) die in der Datenbank (SD3) gespeicherten Sonneninformationen abruft, und
die in der Datenbank (SD3) gespeicherten Sonneninformationen von mehreren autonomen Arbeitsmaschinen (10), die im selben Arbeitsbereich (AR) arbeiten, gemeinsam genutzt werden.

2. System nach Anspruch 1, **dadurch gekennzeichnet, dass** die Steuereinheit (C2) die Wege (301, 302, 303, 304, 305, 801, 802, 1110, 1120, 1111, 1121, 1112, 1122, 1113) so einstellt, dass die Anzahl der Zeiten, in denen die Sonne (S) in den Blickwinkel der Kamera (11, 11R, 11L) fällt, oder die Dauer der Hintergrundbeleuchtung reduziert wird.

3. System nach Anspruch 1 oder 2, **dadurch gekennzeichnet, dass** die Kamera (11, 11R, 11L) durch einen Schwenkwinkel-Einstellmechanismus (11b) gehalten wird, der so konfiguriert ist, dass er einen Winkel in einer horizontalen Richtung einstellt, und einen Neigungswinkel-Einstellmechanismus (11c), der so konfiguriert ist, dass er einen Winkel in einer vertikalen Richtung einstellt, und
die Steuereinheit (C2) mindestens einen der Mechanismen zur Einstellung des Schwenkwinkels (11b) und des Neigungswinkels (11c) steuert, um den Winkel der Kamera (11, 11R, 11L) zu steuern.

4. System nach Anspruch 3, **dadurch gekennzeichnet, dass** die Steuereinheit (C2) den Winkel der Kamera (11, 11R, 11L) in Übereinstimmung mit den eingestellten Wegen (301, 302, 303, 304, 305, 801, 802, 1110, 1120, 1111, 1121, 1112, 1122, 1113) steuert.

5. Verfahren zum Steuern eines Systems von autonomen Arbeitsmaschinen, das eine Vielzahl von autonomen Arbeitsmaschinen, die in demselben Bereich arbeiten, ein Netzwerk (320) und einen Server (350) umfasst, wobei eine autonome Arbeitsmaschine (10), eine Kommunikationseinheit (44b) aufweit, die so konfiguriert ist, dass sie zur drahtlosen Kommunikation mit dem Server (350) über das Netzwerk (320) in der Lage ist, und eine Kamera (11, 11R, 11L) enthält, die so konfiguriert ist, dass sie ein Bild einer Außenwelt erfasst, wobei das Verfahren umfasst:
einen Erfassungsschritt (S904) des Erhaltens, basierend auf Datums- und Zeitinformationen, Azimutinformationen der Sonne (S) und Bildgebungsdatums- und Zeitinformationen der autonomen Arbeitsmaschine (10), von Sonneninformationen, die eine von einer Position und einem Azimut der Sonne (S) anzeigen, in denen Gegenlicht auftreten kann, während sich die autonome Arbeitsmaschine (10) in einem Arbeitsbereich (AR) bewegt;
einen Erzeugungsschritt (C3) des Erzeugens, als die Sonneninformation in einem Fall, in dem ein Weg (305, 801, 1120, 1121, 1122), in der Gegenlicht auftreten wird, unter den eingestellten Wegen (301, 302, 303, 304, 305, 801, 802, 1110, 1120, 1111, 1121, 1112, 1122, 1113) vorhanden ist, während sich die autonome Arbeitsmaschine (10) in dem Arbeitsbereich (AR) bewegt, Informationen, die durch Assoziieren der Azimut-Informationen der Sonne (S) mit den Bildgebungs-Datums- und Zeit-Informationen und Positions-Informationen und Richtungs-Informationen auf dem Weg (301, 302, 303, 304, 305, 801, 802, 1110, 1120, 1111, 1121, 1112, 1122, 1113) der autonomen Arbeitsmaschine (10) erhalten werden; und
einen Steuerschritt (S905) zum Einstellen von Wegen (1010, 1012, 1110, 1111, 1112, 1113, 1120, 1121, 1122), mit denen die autonome Arbeitsmaschine (10) eine Hintergrundbeleuchtung vermeidet, auf der Grundlage der im Erfassungsschritt erhaltenen Sonneninformationen,
**gekennzeichnet, dadurch dass**
die Kommunikationseinheit (44b) eine Datenbank (SD3) in dem Server (350) veranlasst, die in dem Erzeugungsschritt (C3) erzeugten Sonneninformationen zu speichern, die in der Datenbank (SD3) gespeicherten Sonneninformationen erhalten werden und
die in der Datenbank (SD3) gespeicherten Sonneninformationen von mehreren autonomen Arbeitsmaschinen (10), die im selben Arbeitsbereich (AR) arbeiten, gemeinsam genutzt werden.

6. Programm, das Anweisungen enthält, um das System nach Anspruch 1 zu veranlassen, die Schritte des Verfahrens nach Anspruch 5 auszuführen.

## Revendications

1. Système de machines de travail autonomes comprenant une pluralité de machines de travail autonomes travaillant dans la même zone, un réseau (320) et un serveur (350), dans lequel une machine de travail autonome (10) comporte une caméra (11, 11R, 11L) configurée pour capturer une image du monde extérieur, la machine de travail autonome (10) comprenant :
une unité de communication (44b) configurée pour pouvoir communiquer sans fil avec le serveur via le réseau (320) ;
une unité d'obtention (C4) configurée pour obtenir, sur la base d'informations de date et d'heure, d'informations d'azimut du soleil (S) et d'informations de date et d'heure d'imagerie de la machine de travail autonome (10), des informations relatives au soleil qui indiquent l'un parmi une position et un azimut du soleil (S) dans lesquels un rétroéclairage peut se produire lorsque la machine de travail autonome (10) circule dans une zone de travail (AR) ;
une unité de génération (C3) configurée pour générer, comme informations relatives au soleil dans le cas où une piste (305, 801, 1120, 1121, 1122) dans laquelle un rétroéclairage se produira est présente parmi les pistes définies (301, 302, 303, 304, 305, 801, 802, 1110, 1120, 1111, 1121, 1112, 1122, 1113) pendant que la machine de travail autonome (10) circule dans la zone de travail (AR), des informations obtenues en associant les informations d'azimut du soleil (S) aux informations de date et d'heure d'imagerie et aux informations de position et aux informations de direction sur la piste (301, 302, 303, 304, 305, 801, 802, 1110, 1120, 1111, 1121, 1112, 1122, 1113) de la machine de travail autonome (10) ; et
une unité de commande (C2) configurée pour définir, sur la base des informations relatives au soleil générées par l'unité de génération (C3), des pistes (1010, 1012, 1110, 1111, 1112, 1113, 1120, 1121, 1122) permettant à la machine de travail autonome (10) d'éviter le rétroéclairage,
**caractérisé en ce que**
l'unité de communication (44b) amène une base de données (SD3) dans le serveur (350) à stocker les informations relatives au soleil générées par l'unité de génération (C3),
l'unité d'obtention (C4) obtient les informations relatives au soleil stockées dans la base de données (SD3), et
les informations relatives au soleil stockées dans la base de données (SD3) sont partagées entre une pluralité de machines de travail autonomes (10) qui travaillent dans la même zone de travail (AR).

2. Système selon la revendication 1, **caractérisé en ce que** l'unité de commande (C2) définit les pistes (301, 302, 303, 304, 305, 801, 802, 1110, 1120, 1111, 1121, 1112, 1122, 1113) pour réduire l'un parmi le nombre de fois où le soleil (S) se trouvera dans un angle de vue de la caméra (11, 11R, 11L) et une durée du rétroéclairage.

3. Système selon la revendication 1 ou 2, **caractérisé en ce que** la caméra (11, 11R, 11L) est maintenue par un mécanisme de réglage d'angle panoramique (11b) configuré pour régler un angle dans une direction horizontale et un mécanisme de réglage d'angle d'inclinaison (11c) configuré pour régler un angle dans une direction verticale, et
l'unité de commande (C2) va commander au moins l'un parmi le mécanisme de réglage d'angle panoramique (11b) et le mécanisme de réglage d'angle d'inclinaison (11c) pour commander l'angle de la caméra (11, 11R, 11L).

4. Système selon la revendication 3, **caractérisé en ce que** l'unité de commande (C2) commande l'angle de la caméra (11, 11R, 11L) suivant les pistes (301, 302, 303, 304, 305, 801, 802, 1110, 1120, 1111, 1121, 1112, 1122, 1113) définies.

5. Procédé de commande d'un système de machines de travail autonomes comprenant une pluralité de machines de travail autonomes travaillant dans la même zone, un réseau (320) et un serveur (350), dans lequel une machine de travail autonome (10) comporte une unité de communication (44b) configurée pour pouvoir communiquer sans fil avec le serveur (350) via le réseau (320), et une caméra (11, 11R, 11L) configurée pour capturer une image du monde extérieur, le procédé comprenant :
une étape d'obtention (S904) pour obtenir, sur la base d'informations de date et d'heure, d'informations d'azimut du soleil (S) et d'informations de date et d'heure d'imagerie de la machine de travail autonome (10), des informations relatives au soleil qui indiquent l'un parmi une position et un azimut du soleil (S) dans lesquels un rétroéclairage peut se produire lorsque la machine de travail autonome (10) circule dans une zone de travail (AR) ;
une étape de génération (C3) pour générer, comme informations relatives au soleil dans le cas où une piste (305, 801, 1120, 1121, 1122) dans laquelle un rétroéclairage se produira est présente parmi les pistes définies (301, 302, 303, 304, 305, 801, 802, 1110, 1120, 1111, 1121, 1112, 1122, 1113) pendant que la machine de travail autonome (10) circule dans la zone de travail (AR), des informations obtenues en associant les informations d'azimut du soleil (S) aux informations de date et d'heure d'imagerie et aux informations de position et aux informations de direction sur la piste (301, 302, 303, 304, 305, 801, 802, 1110, 1120, 1111, 1121, 1112, 1122, 1113) de la machine de travail autonome (10) ; et
une étape de commande (S905) pour définir, sur la base des informations relatives au soleil obtenues à l'étape d'obtention, des pistes (1010, 1012, 1110, 1111, 1112, 1113, 1120, 1121, 1122) permettant à la machine de travail autonome (10) d'éviter le rétroéclairage,
**caractérisé en ce que**
l'unité de communication (44b) amène une base de données (SD3) dans le serveur (350) à stocker les informations relatives au soleil générées à l'étape de génération (C3), les informations relatives au soleil stockées dans la base de données (SD3) sont obtenues, et les informations relatives au soleil stockées dans la base de données (SD3) sont partagées entre la pluralité de machines de travail autonomes (10) qui travaillent dans la même zone de travail (AR).

6. Programme comprenant des instructions pour amener le système selon la revendication 1 à exécuter les étapes du procédé selon la revendication 5.
